# EUROPÄISCHE PATENTSCHRIFT

(11) **EP 2 301 774 B1**
(45) Veröffentlichungstag und Bekanntmachung des Hinweises auf die Patenterteilung: **21.03.2012**
(21) Anmeldenummer: 10181779.9
(22) Anmeldetag: 29.09.2010
(51) Int. Cl.: B60G 17/052, B62D 65/12, F16F 9/43, G01M 3/00

(54) **Verfahren zum Befüllen eines elektronisch regelbaren Luftfedersystems für Kraftfahrzeuge und Vorrichtung zur Durchführung des Verfahrens**
Method for filling an electronically controlled pneumatic spring system for motor vehicles and device for carrying out the method
Procédé de remplissage d'un système de ressort pneumatique réglable électronique pour véhicules automobiles et dispositif d'exécution du procédé

(30) Priorität: 29.09.2009 DE 102009045097
(43) Veröffentlichungstag der Anmeldung: 30.03.2011
(73) Patentinhaber: Continental Teves AG & Co. oHG, 60488 Frankfurt (DE)
(72) Erfinder: Schaumburg, Harald, 31157 Sarstedt (DE); Vusmuc, Ramon, 550147 Sibiu (RO)

(56) Entgegenhaltungen:
- WO-A1-2005/030510
- DE-A1-102005 030 726

## Beschreibung

Die vorliegende Erfindung betrifft ein Verfahren zum Befüllen eines elektronisch regelbaren Luftfedersystems für Kraftfahrzeuge mit einem Vorratsbehälter, wobei jedem Fahrzeugrad jeweils eine Luftfederdämpfereinheit zugeordnet ist. Außerdem betrifft die vorliegende Erfindung eine Vorrichtung zur Durchführung des Verfahrens.

Die DE 10 2005 030 726 A1 offenbart eine Luftfederungsanlage für ein Kraftfahrzeug der eingangs genannten Gattung und ein Verfahren zu deren Befüllen. Die vorbekannte Luftfederungsanklage weist eine externe Verbindungsleitung auf, die mit einer externen Druckluftquelle verbunden werden kann. Von einem Eingang eines Kompressors zweigt eine Ansaug-Druckluftleitung ab, welche einen externen Anschluss aufweist, um eine externe Druckluftquelle anschließen zu können. Um die externe Druckquelle anschließen zu können bedarf es daher einem vom Druckluftleitungssystem nach außen geführten, externen Anschluss.

Aus der WO 2005/030510 A1 ist ein Luftfedersystem für Kraftfahrzeuge der eingangs genannten Gattung bekannt. Luftfedersysteme bieten einen hohen Komfort für die Fahrzeuginsassen. Problematisch ist der Fall eines bereits im Kraftfahrzeug montierten Luftfedersystems im Fall einer Wartung oder Reparatur, beispielsweise wenn das Luftfedersystem eine Leckage hatte, die repariert wurde. Meist befindet sich anschließend nicht mehr ausreichend Druckluft im Luftfedersystem.

Es ist daher Aufgabe der vorliegenden Erfindung, ein Verfahren zum Befüllen eines Luftfedersystems darzustellen, mit dem ein bereits im Kraftfahrzeug montiertes Luftfedersystem mit Druckluft befüllt werden kann.

Diese Aufgabe wird durch ein Verfahren und eine Vorrichtung nach den Merkmalen der unabhängigen Patentansprüche gelöst. Dabei ist ein Verfahren mit den folgenden Verfahrensschritten vorgesehen. Zunächst wird eine Luftfederdämpfereinheit vom Luftfedersystem getrennt und anstelle der vom Luftfederungssystem getrennten Luftfederdämpfereinheit eine Druckluftquelle angeschlossen. Mit Hilfe der Druckluftquelle werden die angeschlossenen Luftfederdämpfereinheiten und der Vorratsbehälter mit Druckluft befüllt. Anschließend wird die Druckluftquelle wieder vom Luftfedersystem getrennt und die zuvor abgetrennte Luftfederdämpfereinheit wieder angeschlossen. Die zuvor abgetrennte Luftfederdämpfereinheit wird nachfolgend mit Druckluft aus dem Vorratsbehälter befüllt. Der Vorteil dieses Verfahrens ist, ein Befüllverfahren zu schaffen, bei dem zum Befüllen eines bereits im Kraftfahrzeug montierten Luftfedersystem lediglich ein Knopf gedrückt werden muss, um das Befüllverfahren zu starten.

Zur Durchführung des erfindungsgemäßen Verfahrens ist vorgesehen, dass zur Befüllung des Vorratsbehälters mit Druckluft zwei Umschaltventile so geschaltet werden, dass die Druckluftquelle mit dem Vorratsbehälter verbunden ist. Während der Befüllung des Vorratsbehälters mit Druckluft werden die den Luftfederdämpfereinheiten zugeordneten Ventile geschlossen und das der getrennten Luftfederdämpfereinheit zugeordnete Ventil geöffnet.

Das erfindungsgemäße Verfahren sieht vor, dass während der Befüllung der angeschlossenen Luftfederdämpfereinheiten ein Umschaltventil geschlossen wird und die den Luftfederdämpfereinheiten zugeordneten Ventile nacheinander für eine vorbestimmte Zeitdauer geöffnet und anschließend geschlossen werden. Die Ventilöffnungsdauer wird dabei aus der Volumenaufnahme der Luftfederdämpfereinheiten und der Förderleistung der Druckluftquelle bestimmt.

Bei der erfindungsgemäßen Vorrichtung sind Mittel zur Durchführung der folgenden Verfahrensschritte vorgesehen:
- Trennen einer Luftfederdämpfereinheit vom Luftfedersystem;
- Anschließen einer Druckluftquelle anstelle der vom Luftfederungssystem getrennten Luftfederdämpfereinheit;
- Befüllen der angeschlossenen Luftfederdämpfereinheiten und des Vorratsbehälters;
- Trennen der Druckluftquelle vom Luftfedersystem;
- Anschließen der zuvor getrennten Luftfederdämpfereinheit und
- Befüllen der zuvor getrennten Luftfederdämpfereinheit mit Druckluft aus dem Vorratsbehälter.

Es ist vorgesehen, dass die Mittel durch eine Steuereinheit gebildet werden, die mit einem CAN-Datennetzwerk des Kraftfahrzeugs verbindbar ist. Durch diese Maßnahme ist eine Wartungs- und/oder Werkstattvorrichtung realisierbar, die als Befüllungssystem dient. In der Steuereinheit ist eine Software-Funktion mit einem Algorithmus gespeichert, um das gesamte System mit Druckluft zu befüllen.

In einer Weiterbildung des Erfindungsgegenstandes ist vorgesehen, dass die Druckluftquelle als Kompressor ausgebildet ist. Außerdem ist ein Drucksensor vorgesehen, der den von der Druckluftquelle zur Verfügung gestellten Luftdruck erfasst.

Die Erfindung wird nachfolgend anhand eines Ausführungsbeispiels im Zusammenhang mit der beiliegenden Zeichnung näher erläutert. In der Zeichnung zeigen:
- Fig. 1: ein Schaltbild eines Luftfedersystems mit jeweils einer Luftfederdämpfereinheit an jedem Fahrzeugrad und
- Fig. 2: ein weiteres Schaltbild eines Luftfedersystems, bei dem eine Luftfederdämpfereinheit durch eine Druckluftquelle ersetzt ist.

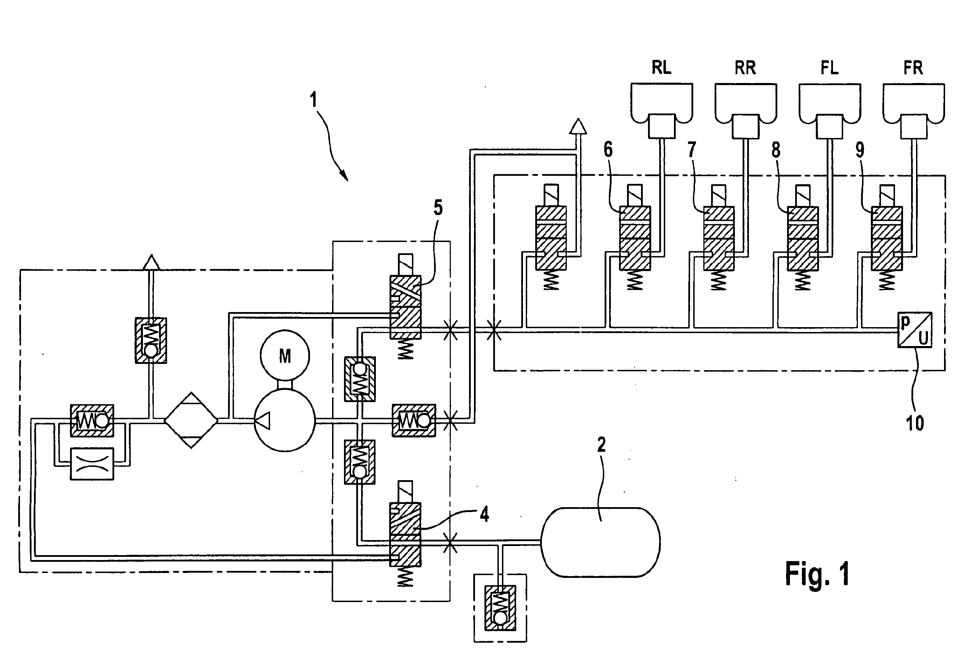

Das in Fig. 1 schematisch dargestellte Luftfedersystems 1 weist vier Luftfederdämpfereinheiten RL, RR, FL, FR auf, die jeweils einem Fahrzeugrad eines Kraftfahrzeugs zugeordnet sind. Jeder der Luftfederdämpfereinheiten RL, RR, FL, FR ist über ein stromlos geschlossenes Ventil 6, 7, 8, 9 an ein Druckluftleitungssystem angeschlossen. Das Luftfedersystem 1 weist weiterhin einen Vorratsbehälter 2 auf, der über zwei Umschaltventile 4, 5 mit den Luftfederdämpfereinheiten RL, RR, FL, FR verbindbar ist. Im Druckluftleitungssystem befindet sich ein Drucksensor 10, der den im Druckluftleitungssystem herrschenden Druck ermittelt und ein entsprechendes Signal an eine nicht dargestellt Steuereinheit ausgibt. Bei dem Luftfedersystem 1 handelt es sich um ein geschlossenes System, bei dem nur im Wartungs- oder Reparaturfall von auβen Druckluft zugerührt wird.

Problematisch ist der Fall, wenn das Luftfedersystem 1 eine Leckage hatte, die repariert wurde oder eine der Luftfederdämpfereinheiten RL, RR, FL, FR gewechselt werden musste. Meist befindet sich anschließend nicht mehr ausreichend Druckluft im Luftfedersystem 1.

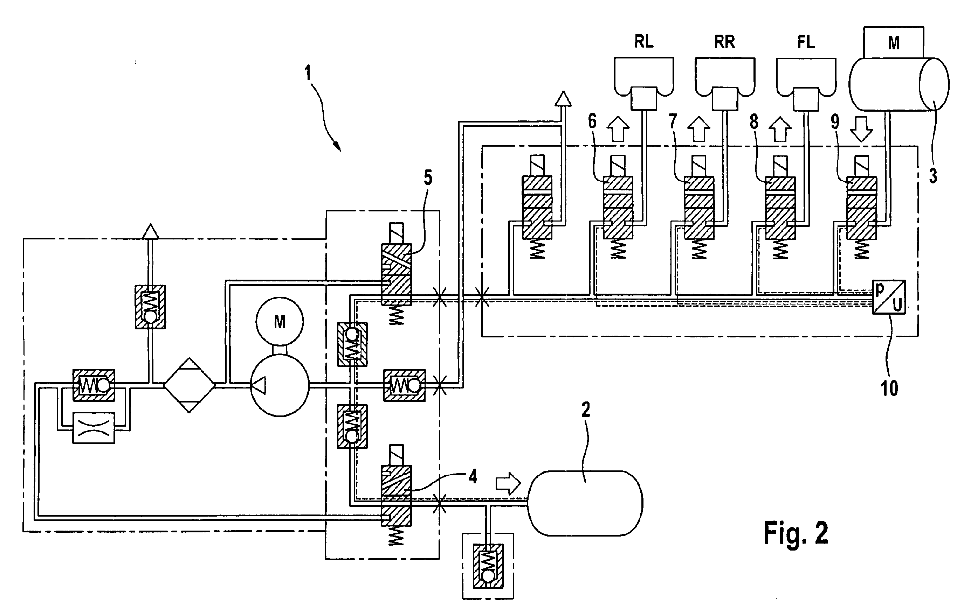

Das vorliegende Verfahren sieht daher einen Befüllvorgang eines bereits im Kraftfahrzeug montierten Luftfedersystems 1 als Reparatur- oder Wartungsroutine vor. Wie Fig. 2 entnehmbar ist wird dazu eine Luftfederdämpfereinheit FR vom Luftfedersystem 1 getrennt und anstelle der Luftfederdämpfereinheit FR wird eine Druckquelle 3 an das Luftfedersystem 1 angeschlossen. Als Druckquelle 3 dient beispielsweise ein motorbetriebener Kompressor. Anschließend werden die verbliebenen Luftfederdämpfereinheiten RR, RL, FL und der Vorratsbehälter mit Druckluft befüllt. Die Druckluftquelle 3 wird wieder vom Luftfedersystem 1 getrennt und die zuvor abgetrennte Luftfederdämpfereinheit FR wird wieder ans Luftfedersystem 1 angeschlossen. Diese zuvor abgetrennte Luftfederdämpfereinheit FR wir anschließend mit Druckluft aus dem Vorratsbehälter 3 befüllt.

Das Befüllungsverfahren läuft dabei folgendermaßen ab: Nach dem Abtrennen der Luftfederdämpfereinheit FR wird an deren Stelle die Druckquelle 3 angeschlossen und das zugehörige Ventil 9 geöffnet. Zur Befüllung des Vorratsbehälters 2 bleiben die den Luftfederdämpfereinheiten RR, RL, FL zugeordneten Ventile 6, 7, 8 geschlossen während die Umschaltventile 4, 5 so geschaltet werden, dass die Druckluftquelle 3 mit dem Vorratsbehälter 2 verbunden ist. Anschließend wird der Vorratsbehälter 2 mit Druckluft befüllt.

Zum Befüllen der verbliebenen Luftfederdämpfereinheiten RR, RL, FL wird das Umschaltventil 4 geschlossen und die den verbliebenen Luftfederdämpfereinheiten RR, RL, FL zugeordneten Ventile 6, 7, 8 werden nacheinander für eine Zeitdauer t₁ geöffnet und anschließend wieder geschlossen. Die Zeitdauer t₁ wird dabei aus der Volumenaufnahme der Luftfederdämpfereinheiten RR, RL, FL, FR und der Förderleistung der Druckluftquelle 3 bestimmt. Auf diese Weise werden die verbliebenen Luftfederdämpfereinheiten RR, RL, FL nacheinander mit Druckluft befüllt. Anschließend wird das der abgetrennten Luftfederdämpfereinheit FR zugeordnete Ventil 9 geschlossen und die Druckquelle 3 wieder vom Luftfedersystem 1 getrennt. Nachdem die zuvor getrennte Luftfederdämpfereinheit FR wieder angeschlossen ist, wird das zugeordnete Ventil 9 geöffnet und die Umschaltventile 4, 5 werden so geschaltet, dass der Vorratsbehälter 2 mit der zuvor getrennten Luftfederdämpfereinheit FR verbunden ist. Anschließend wird die zuvor getrennte Luftfederdämpfereinheit FR mit Druckluft aus dem Vorratsbehälter 2 befüllt.

Selbstverständlich kann anstelle der Luftfederdämpfereinheit FR auch jede andere der Luftfederdämpfereinheiten RR, RL, FL abgetrennt werden, um den dann verfügbaren Anschluss mit der Druckquelle 3 zu verbinden.

Das beschriebene Verfahren zum Befüllen des Luftfedersystems 1 kann mit einem Diagnoseprogramm, das an das CAN-Netzwerk angeschlossen wird, aufgerufen werden. Zu diesem Zweck ist das Diagnoseprogramm in einer Steuereinheit abgelegt, die mit dem CAN-Datennetzwerk des Kraftfahrzeugs verbunden werden kann. Diese Steuereinheit wird von einem fachkundigen Werkstattpersonal an das Kraftfahrzeug angeschlossen und das beschriebene Befüllverfahren wird gestartet. In dem Diagnoseprogramm ist auch eine Tabelle mit Kalibrierungsparametern aufgeführt, die dabei helfen, die vorliegende Befüllungsroutine an eine große Anzahl von unterschiedlichen Luftfedersystemen anzuschließen. Mit diesen Kalibrierungsparametern wird die Zeit reduziert, in denen die Ventile 4,5, 6, 7, 8, 9 unnötigerweise geöffnet sind, um das Luftfedersystem 1 zu befüllen.

Der Vorteil dieses Verfahrens ist, ein Befüllverfahren zu schaffen, bei dem zum Befüllen eines bereits im Kraftfahrzeug montierten Luftfedersystem 1 lediglich ein Knopf gedrückt werden muss, um das Befüllverfahren zu starten. Vorteilhaft ist also bei dem beschriebenen Verfahren, dass der Verwender in einer Werkstatt zum Nachfüllen von Druckluft oder zur Neubefüllung nach einem Komponentenaustausch lediglich eine Funktion aufrufen muss, die selbsttätig das Befüllen mit Druckluft vornimmt. Die erfindungsgemäße Befüllungsroutine kann mit Hilfe der Kalibrierungsparameter so eingestellt werden, dass die Befüllung mit gewünschten Druckwerten in den Komponenten durchgeführt wird.

## Patentansprüche

1. Verfahren zum Befüllen eines elektronisch regelbaren Luftfedersystems (1) für Kraftfahrzeuge mit einem Vorratsbehälter (2), wobei jedem Fahrzeugrad jeweils eine Luftfederdämpfereinheit (RL, RR, FL, FR) zugeordnet ist, **gekennzeichnet durch** die folgenden Verfahrensschritte:
- Trennen einer Luftfederdämpfereinheit (FR) vom Luftfedersystem (1);
- Anschließen einer Druckluftquelle (3) anstelle der vom Luftfedersystem (1) getrennten Luftfederdämpfereinheit (FR);
- Befüllen der angeschlossenen Luftfederdämpfereinheiten (RL, RR, FL) und des Vorratsbehälters (2);
- Trennen der Druckluftquelle (3) vom Luftfedersystem (1) ;
- Anschließen der zuvor getrennten Luftfederdämpfereinheit (FR) und
- Befüllen der zuvor getrennten Luftfederdämpfereinheit (FR) mit Druckluft aus dem Vorratsbehälter (2).

2. Verfahren nach Anspruch 1, **dadurch gekennzeichnet, dass** zur Befüllung des Vorratsbehälters (2) mit Druckluft zwei Umschaltventile (4, 5) so geschaltet werden, dass die Druckluftquelle (3) mit dem Vorratsbehälter (2) verbunden ist.

3. Verfahren nach Anspruch 2, **dadurch gekennzeichnet, dass** während der Befüllung des Vorratsbehälters (2) mit Druckluft die den Luftfederdämpfereinheiten (RL, RR, FL) zugeordneten Ventile (6, 7, 8) geschlossen werden während das der getrennten Luftfederdämpfereinheit (FR) zugeordnete Ventil (9) geöffnet wird.

4. Verfahren nach einem der vorhergehenden Ansprüche, **dadurch gekennzeichnet, dass** während der Befüllung der angeschlossenen Luftfederdämpfereinheiten (RL, RR, FL) ein Umschaltventil (4) geschlossen wird und die den Luftfederdämpfereinheiten (RL, RR, FL) zugeordneten Ventile (6, 7, 8) nacheinander für eine vorbestimmte Zeitdauer t₁ geöffnet und anschließend geschlossen werden.

5. Verfahren nach Anspruch 4, **dadurch gekennzeichnet, dass** die Ventilöffnungsdauer t₁ aus der Volumenaufnahme der Luftfederdämpfereinheiten (RL, RR, FL, FR) und der Förderleistung der Druckluftquelle (3) bestimmt wird.

6. Vorrichtung zum Befüllen eines elektronisch regelbaren Luftfedersystems (1) für Kraftfahrzeuge mit einen Vorratsbehälter (2), bei der jedem Fahrzeugrad jeweils eine Luftfederdämpfereinheit (RL, RR, FL, FR) zugeordnet ist, **dadurch gekennzeichnet, dass** Mittel zur Durchführung der folgenden Verfahrensschritte vorgesehen sind:
- Trennen einer Luftfederdämpfereinheit (FR) vom Luftfedersystem (1);
- Anschließen einer Druckluftquelle (3) anstelle der vom Luftfedersystem (1) getrennten Luftfederdämpfereinheit (FR);
- Befüllen der angeschlossenen Luftfederdämpfereinheiten (RL, RR, FL) und des Vorratsbehälters (2);
- Trennen der Druckluftquelle (3) vom Luftfedersystem (1) ;
- Anschließen der zuvor getrennten Luftfederdämpfereinheit (FR) und
- Befüllen der zuvor getrennten Luftfederdämpfereinheit (FR) mit Druckluft aus dem Vorratsbehälter (2).

7. Vorrichtung nach Anspruch 6, **dadurch gekennzeichnet, dass** die Mittel durch eine Steuereinheit gebildet werden, die mit einem CAN-Datennetzwerk des Kraftfahrzeugs verbindbar ist.

8. Vorrichtung nach Anspruch 6 oder 7, **dadurch gekennzeichnet, dass** die Druckluftquelle (3) als Kompressor ausgebildet ist.

9. Vorrichtung nach einem der Ansprüche 6 bis 8, **dadurch gekennzeichnet, dass** ein Drucksensor (10) vorgesehen ist, der den von der Druckluftquelle (3) zur Verfügung gestellte Luftdruck erfasst.

## Claims

1. Method for filling an electronically controllable pneumatic spring system (1) for motor vehicles having a reservoir container (2), wherein each vehicle wheel is respectively assigned an air spring damper unit (RL, RR, FL, FR) **characterized by** the following method steps:
- disconnection of an air spring damper unit (FR) from the air spring system (1);
- connection of a compressed air source (3) instead of the air spring damper unit (FR) which is disconnected from the air spring system (1);
- filling of the connected air spring damper units (RL, RR, FL) and of the reservoir container (2);
- disconnection of the compressed air source (3) from the air spring system (1);
- connection of the previously disconnected air spring damper unit (FR), and
- filling of the previously disconnected air spring damper unit (FR) with compressed air from the reservoir container (2).

2. Method according to Claim 1, **characterized in that** in order to fill the reservoir container (2) with compressed air two switching valves (4, 5) are switched in such a way that the compressed air source (3) is connected to the reservoir container (2).

3. Method according to Claim 2, **characterized in that** during the filling of the reservoir container (2) with compressed air the valves (6, 7, 8) which are assigned to the air spring damper units (RL, RR, FL) are closed while the valve (9) which is assigned to the disconnected air spring damper unit (FR) is opened.

4. Method according to one of the preceding claims, **characterized in that** during the filling of the connected air spring damper units (RL, RR, FL) a switching valve (4) is closed and the valves (6, 7, 8) which are assigned to the air damper spring units (RL, RR, FL) are successively opened for a predetermined time period t₁ and subsequently closed.

5. Method according to Claim 4, **characterized in that** the valve opening period t₁ is determined from the volume takeup of the air spring damper units (RL, RR, FL, FR) and the delivery capacity of the compressed air source (3).

6. Device for filling an electronically controllable air spring system (1) for motor vehicles with a reservoir container (2), in which device each vehicle wheel is respectively assigned an air damper spring unit (RL, RR, FL, FR), **characterized in that** means for carrying out the following method steps are provided:
- disconnection of an air spring damper unit (FR) from the air spring system (1);
- connection of a compressed air source (3) instead of the air spring damper unit (FR) which is disconnected from the air spring system (1);
- filling of the connected air spring damper units (RL, RR, FL) and of the reservoir container (2);
- disconnection of the compressed air source (3) from the air spring system (1);
- connection of the previously disconnected air spring damper unit (FR), and
- filling of the previously disconnected air spring damper unit (FR) with compressed air from the reservoir container (2).

7. Device according to Claim 6, **characterized in that** the means are formed by a control unit which can be connected to a CAN data network of the motor vehicle.

8. Device according to claim 6 or 7, **characterized in that** the compressed air source (3) is embodied as a compressor.

9. Device according to one of Claims 6 to 8, **characterized in that** a pressure sensor (10) is provided which senses the air pressure which is made available by the compressed air source (3).

## Revendications

1. Procédé pour remplir un système de suspension pneumatique (1) à régulation électronique pour véhicules automobiles muni d'un réservoir (2), une unité d'amortissement pneumatique (RL, RR, FL, FR) étant respectivement associée à chaque roue de véhicule, **caractérisé par** les étapes suivantes :
- Déconnexion d'une unité d'amortissement pneumatique (FR) du système de suspension pneumatique (1) ;
- Raccordement d'une source d'air comprimé (3) à la place de l'unité d'amortissement pneumatique (FR) déconnectée du système de suspension pneumatique (1) ;
- Remplissage des unités d'amortissement pneumatique (RL, RR, FL) raccordées et du réservoir (2) ;
- Déconnexion de la source d'air comprimé (3) du système de suspension pneumatique (1) ;
- Raccordement de l'unité d'amortissement pneumatique (FR) déconnectée précédemment et
- Remplissage de l'unité d'amortissement pneumatique (FR) déconnectée précédemment avec de l'air comprimé depuis le réservoir (2).

2. Procédé selon la revendication 1, **caractérisé en ce que** pour le remplissage du réservoir (2) avec de l'air comprimé, deux vannes d'inversion (4, 5) sont commutées de telle sorte que la source d'air comprimé (3) est reliée avec le réservoir (2).

3. Procédé selon la revendication 2, **caractérisé en ce que** pendant le remplissage du réservoir (2) avec de l'air comprimé, les vannes (6, 7, 8) associées aux unités d'amortissement pneumatique (RL, RR, FL) sont fermées, alors que la vanne (9) associée à l'unité d'amortissement pneumatique (FR) déconnectée est ouverte.

4. Procédé selon l'une des revendications précédentes, **caractérisé en ce que** pendant le remplissage des unités d'amortissement pneumatique (RL, RR, FL) raccordées, une vanne d'inversion (4) est fermée et les vannes (6, 7, 8) associées aux unités d'amortissement pneumatique (RL, RR, FL) sont ouvertes les unes après les autres pendant une durée prédéfinie t₁ et ensuite fermées.

5. Procédé selon la revendication 4, **caractérisé en ce que** la durée d'ouverture des vannes t₁ est déterminée à partir du volume absorbé par les unités d'amortissement pneumatique (RL, RR, FL, FR) et de la capacité de refoulement de la source d'air comprimé (3).

6. Dispositif pour remplir un système de suspension pneumatique (1) à régulation électronique pour véhicules automobiles muni d'un réservoir (2), une unité d'amortissement pneumatique (RL, RR, FL, FR) étant respectivement associée à chaque roue de véhicule, **caractérisé en ce que** des moyens sont prévus pour exécuter les étapes de procédé suivantes :
- Déconnexion d'une unité d'amortissement pneumatique (FR) du système de suspension pneumatique (1) ;
- Raccordement d'une source d'air comprimé (3) à la place de l'unité d'amortissement pneumatique (FR) déconnectée du système de suspension pneumatique (1) ;
- Remplissage des unités d'amortissement pneumatique (RL, RR, FL) raccordées et du réservoir (2) ;
- Déconnexion de la source d'air comprimé (3) du système de suspension pneumatique (1) ;
- Raccordement de l'unité d'amortissement pneumatique (FR) déconnectée précédemment et
- Remplissage de l'unité d'amortissement pneumatique (FR) déconnectée précédemment avec de l'air comprimé depuis le réservoir (2).

7. Dispositif selon la revendication 6, **caractérisé en ce que** les moyens sont formés par une unité de commande qui peut être reliée avec un réseau de données CAN du véhicule automobile.

8. Dispositif selon la revendication 6 ou 7, **caractérisé en ce que** la source d'air comprimé (3) est réalisée sous la forme d'un compresseur.

9. Dispositif selon l'une des revendications 6 à 8, **caractérisé en ce qu'**il est prévu un capteur de pression (10) qui détecte la pression d'air mise à disposition par la source d'air comprimé (3).
